(19) Europäisches Patentamt
European Patent Office
Office européen des brevets

(11) EP 4 542 684 A1

(12) # EUROPEAN PATENT APPLICATION

(43) Date of publication:
**23.04.2025 Bulletin 2025/17**

(21) Application number: **24183412.6**

(22) Date of filing: **20.06.2024**

(51) International Patent Classification (IPC):
***H01M 4/525*** *(2010.01)* ***H01M 10/052*** *(2010.01)*
***H01M 10/0525*** *(2010.01)* ***H01M 10/42*** *(2006.01)*
***H01M 10/0567*** *(2010.01)*

(52) Cooperative Patent Classification (CPC):
**H01M 10/0567; H01M 4/525; H01M 10/052; H01M 10/0525; H01M 10/4235;** H01M 2004/028; H01M 2300/0025; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023 KR 20230090558**

(71) Applicant: **Samsung SDI Co., Ltd.**
**Yongin-si, Gyeonggi-do 17084 (KR)**

(72) Inventors:
- **Choi, Hyunbong**
  **17084 Yongin-si, Gyeonggi-do (KR)**
- **Yang, Yeji**
  **17084 Yongin-si, Gyeonggi-do (KR)**
- **Park, Injun**
  **17084 Yongin-si, Gyeonggi-do (KR)**
- **Park, Sangwoo**
  **17084 Yongin-si, Gyeonggi-do (KR)**
- **Park, Hongryeol**
  **17084 Yongin-si, Gyeonggi-do (KR)**
- **Kim, Sohee**
  **16677 Suwon-si Gyeonggi-do (KR)**
- **Kim, Sanghoon**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **ADDITIVE, ELECTROLYTE FOR RECHARGEABLE LITHIUM BATTERY AND RECHARGEABLE LITHIUM BATTERY**

(57) An additive represented by Chemical Formula 1, an electrolyte for a rechargeable lithium battery, and a rechargeable lithium battery are disclosed:

Chemical Formula 1

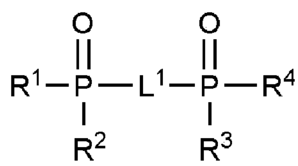

The description of Chemical Formula 1 follows the specification.

EP 4 542 684 A1

## Description

## BACKGROUND

### 1. Field

The present disclosure herein relates to an additive, an electrolyte for a rechargeable lithium battery including the same, and a rechargeable lithium battery.

### 2. Description of the Related Art

Recently, with the rapid spread (and/or development) of electronic devices that utilize batteries, such as mobile phones, laptop computers, and/or electric vehicles, the demand for rechargeable batteries with relatively high energy density and relatively high capacity is rapidly increasing. Accordingly, research and development to improve the performance of rechargeable lithium batteries are being actively conducted (e.g., underway) or pursued.

A rechargeable lithium battery includes a positive electrode and a negative electrode, each including an active material capable of intercalating and deintercalating lithium ions, and an electrolyte. Electrical energy is produced through oxidation and reduction reactions if (e.g., when) lithium ions are intercalated/deintercalated to/from the positive electrode and negative electrode.

One of the recent development directions for rechargeable lithium batteries is to improve high-temperature characteristics of the batteries. In general, rechargeable lithium batteries may experience problems such as increased resistance, gas generation, and/or reduced cycle-life at high temperatures.

## SUMMARY

The invention is defined by the appended claims. The description that follows is subjected to this limitation. Any disclosure lying outside the scope of said claims is only intended for illustrative as well as comparative purposes. Aspects according to some embodiments are directed toward an electrolyte additive for a rechargeable lithium battery that improves cycle-life characteristics while suppressing or reducing an increase in resistance and gas generation of the rechargeable lithium battery at high tem peratures.

Additional aspects will be set forth in part in the description which follows and, in part, will be apparent from the description, or may be learned by practice of the presented embodiments of the disclosure.

According to one embodiment of the present invention, an electrolyte additive for a rechargeable lithium battery is represented by Chemical Formula 1:

Chemical Formula 1

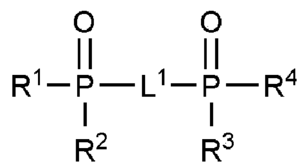

.

In Chemical Formula 1, $L^1$ is a substituted or unsubstituted C1 to C20 alkylene group; and $R^1$ to $R^4$ are each independently a substituted or unsubstituted C6 to C20 aryl group.

According to another embodiment of the present invention, an electrolyte includes the electrolyte additive.

According to a further embodiment of the present invention, a rechargeable lithium battery includes the electrolyte.

The additive according to some embodiments can suppress or reduce metal elution from a positive electrode active material at high temperatures, thereby suppressing or reducing an increase in resistance and gas generation in a rechargeable lithium battery and improving cycle-life characteristics.

## BRIEF DESCRIPTION OF THE DRAWINGS

The accompanying drawings are included to provide a further understanding of the present disclosure and are incorporated in and constitute a part of this specification. The drawings illustrate embodiments of the present disclosure and, together with the description, serve to explain principles of the present disclosure. In the drawings:

FIG. 1 is a schematic illustration of a cylindrical battery according to some embodiments.
FIG. 2 is a schematic illustration of a prismatic battery according to some embodiments.
FIG. 3 is a schematic illustration of a pouch-type or kind battery according to some embodiments.
FIG. 4 is a schematic illustration of a pouch-type or kind battery according to some embodiments.

## DETAILED DESCRIPTION

Hereinafter, embodiments of the present disclosure will be described in more detail. However, these embodiments are examples, the present disclosure is not limited thereto and the scope of the present disclosure is defined by the claims and equivalents thereof.

As used herein, if specific definition is not otherwise provided, it will be understood that if an element such as a layer, film, region, or substrate is referred to as being "on" another element, it can be directly on the other element or intervening elements may also be present.

As used herein, if specific definition is not otherwise provided, the singular expression may also include the plural expression. In addition, unless otherwise specified, the term "A or B" may refer to "including A, including B, or including A and B."

As used herein, the term "a combination thereof" may refer to a mixture, a stack, a composite, a copolymer, an alloy, a blend, and a reaction product of the constituents.

As used herein, if specific definition is not otherwise provided, the term "alkyl group" refers to a C1 to C20 alkyl group, the term "alkenyl group" refers to a C2 to C20 alkenyl group, the term "cycloalkenyl group" refers to a C3 to C20 cycloalkenyl group, the term "heterocycloalkenyl group" refers to a C3 to C20 heterocycloalkenyl group, the term "aryl group" refers to a C6 to C20 aryl group, the term "arylalkyl group" refers to a C6 to C20 arylalkyl group, the term "alkylene group" refers to a C1 to C20 alkylene group, the term "arylene group" refers to a C6 to C20 arylene group, the term "alkylarylene group" refers to a C6 to C20 alkylarylene group, the term "heteroarylene group" refers to a C3 to C20 heteroarylene group, and the term "alkoxylene group" refers to a C1 to C20 alkoxylene group.

As used herein, if specific definition is not otherwise provided, the term "substituted" refers to substitution (replacing a hydrogen atom) with a halogen atom (F, Cl, Br, I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, and/or a (e.g., any suitable) combination thereof.

As used herein, if a definition is not otherwise provided, in chemical formulas, hydrogen is bonded at the position if a chemical bond is not drawn where it is supposed to be given.

### Additive

An electrolyte additive for a rechargeable lithium battery is represented by Chemical Formula 1:

Chemical Formula 1

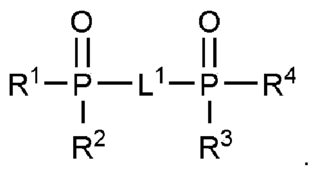

The additive includes phosphate groups and aryl groups symmetrically and is capable of being oxidized and decomposed on the surface of the positive electrode to form (or provide) an SEI film with high stability and heat resistance. The SEI film formed on the surface of the positive electrode can suppress or reduce metal elution from the positive electrode active material, thereby improving the cycle-life characteristics of the rechargeable lithium battery while suppressing or reducing an increase in resistance and gas generation.

The descriptions of Chemical Formula 1 representing the additive are as follows.

$L^1$ is a substituted or unsubstituted C1 to C20 alkylene group.

For example, $L^1$ may be a substituted or unsubstituted C1 to C3 alkylene group.

$R^1$ to $R^4$ may each independently be a substituted or unsubstituted C6 to C20 aryl group.

For example, $R^1$ to $R^4$ may all be phenyl groups.

Chemical Formula 1 may be represented by Chemical Formula 1-1:

Chemical Formula 1-1

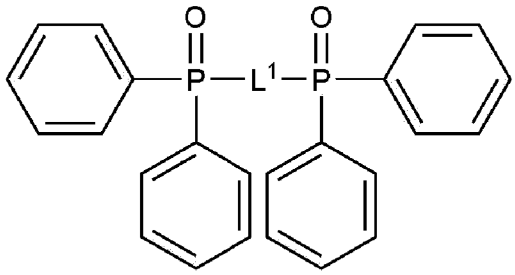

In Chemical Formula 1-1, the definition of $L^1$ is the same as described above.

Examples of the additive represented by Chemical Formula 1 are as follows:

Chemical Formula 1-1-1

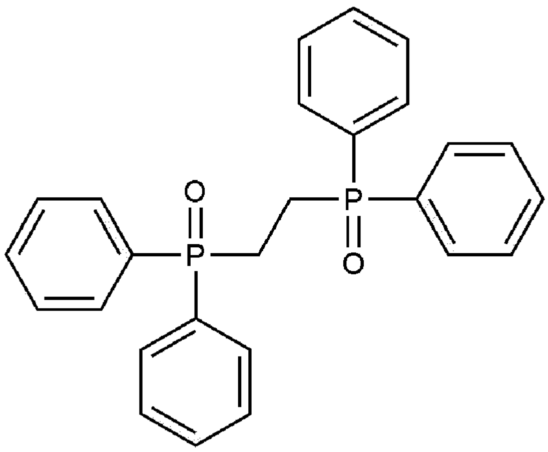

Chemical Formula 1-1-2

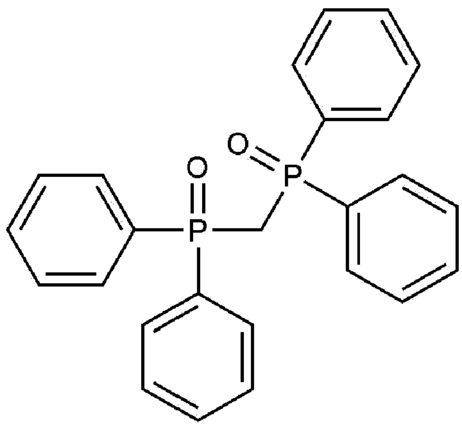

Chemical Formula 1-1-3

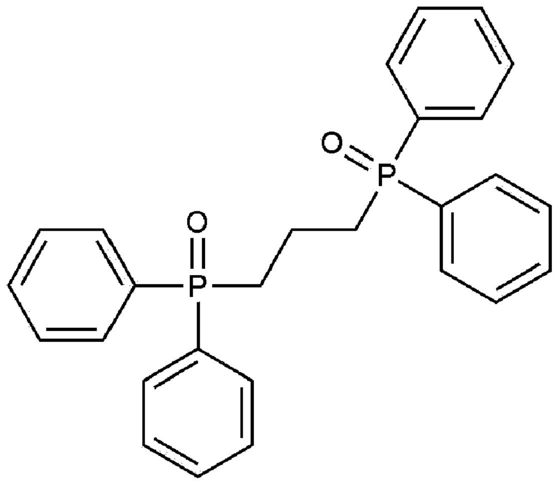

.

Electrolyte

An electrolyte for a rechargeable lithium battery includes a non-aqueous organic solvent; a lithium salt; and the above-mentioned additive represented by Chemical Formula 1.

The additive included in the electrolyte suppresses metal elution from the positive electrode active material at high temperatures, thereby suppressing or reducing an increase in resistance and gas generation in a rechargeable lithium battery and improving cycle-life characteristics.

The additive may be included in an amount of0.05 wt% to3 wt%,0.05 wt% to2 wt%, or0.05 wt% to1 wt%, based on 100 wt% of the electrolyte. Within these ranges, the additive may be oxidized and decomposed on the surface of the positive electrode to form (or provide) an SEI film with high stability and heat resistance. That is, within these ranges, the SEI film formed on the surface of the positive electrode through oxidization and decomposition of the additive may have suitable (e.g., high) stability and heat resistance.

**Non-aqueous Organic Solvent**

The non-aqueous organic solvent serves as a medium for transmitting (e.g., transporting) ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methyl propionate, ethyl propionate, propyl propionate, decanolide, mevalonolactone, valerolactone, caprolactone, and/or the like

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone and/or the like. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane and/or 1,4-dioxolane, sulfolanes, and/or the like.

The non-aqueous organic solvent may be utilized alone or in combination of two or more.

In some embodiments, if utilizing a carbonate-based solvent, cyclic carbonate and chain carbonate may be mixed and utilized, and cyclic carbonate and chain carbonate may be mixed at a volume ratio of1:1 to1:9.

**Lithium Salt**

The lithium salt dissolved in the organic solvent supplies lithium ions in a battery, enables a basic operation of a rechargeable lithium battery, and improves transportation of the lithium ions between positive and negative electrodes. Examples of the lithium salt may include one or more selected from among $LiPF_6$, $LiBF_4$, $LiSbF_6$, $LiAsF_6$, $LiClO_4$, $LiAlO_2$,

$LiAlCl_4$, $LiPO_2F_2$, LiCl, LiI, $LiN(SO_3C_2F_5)_2$, $Li(FSO_2)_2N$ (lithium bis(fluorosulfonyl)imide (LiFSI)), $LiC_aF_9SO_3$, $LiC_4F_9SO_3$, $LiN(C_xF_{2x+1}SO_2)(C_yF_{2y+1}SO_2)$, x and y are each independently an integer of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

**Rechargeable Lithium Battery**

A rechargeable lithium battery includes a positive electrode including a positive electrode active material; a negative electrode containing a negative electrode active material; and the above-mentioned electrolyte including a non-aqueous organic solvent; a lithium salt; and an additive represented by Chemical Formula 1:

Chemical Formula 1

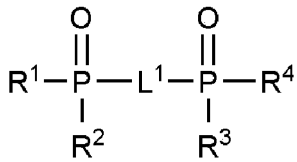

The additive included in the electrolyte suppresses metal elution from the positive electrode active material at high temperatures, thereby suppressing or reducing an increase in resistance and gas generation in a rechargeable lithium battery and improving cycle-life characteristics.

**Positive Electrode Active Material**

The positive electrode active material may be a compound (lithiated intercalation compound) capable of intercalating and deintercalating lithium. For example, one or more types (kinds) of composite oxides of lithium and a metal selected from among cobalt, manganese, nickel, and a (e.g., any suitable) combination thereof may be utilized.

The composite oxide may be a lithium transition metal composite oxide, and examples thereof may include lithium nickel-based oxide, lithium cobalt-based oxide, lithium manganese-based oxide, a lithium iron phosphate-based compound, cobalt-free lithium nickel-manganese-based oxide, and/or a (e.g., any suitable) combination thereof.

As an example, a compound represented by any of the following Chemical Formulas may be utilized. $Li_aA_{1-b}X_bO_{2-c}D_c$ ($0.90 \le a \le 1.8$, $0 \le b \le 0.5$, $0 \le c \le 0.05$); $Li_aMn_{2-b}X_bO_{4-c}D_c$ ($0.90 \le a \le 1.8$, $0 \le b \le 0.5$, $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, $0 < \alpha < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$, $0 < \alpha < 2$); $Li_aNi_bCo_cL^1_{d-}G_eO_2$ ($0.90 \le a \le 1.8$, $0 \le b \le 0.9$, $0 \le c \le 0.5$, $0 \le d \le 0.5$, $0 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMn_{1-b}G_bO_2$

($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $Li_{(3-f)}Fe_2(PO_4)_3$ ($0 \le f \le 2$); and/or $Li_aFePO_4$ ($0.90 \le a \le 1.8$).

In the above Chemical Formulas, A is Ni, Co, Mn, and/or a (e.g., any suitable) combination thereof; X is Al, Ni, Co, Mn, Cr, Fe, Mg, Sr, V, a rare earth element, and/or a (e.g., any suitable) combination thereof; D is O, F, S, P, and/or a (e.g., any suitable) combination thereof; G is Al, Cr, Mn, Fe, Mg, La, Ce, Sr, V, and/or a (e.g., any suitable) combination thereof; and $L^1$ is Mn, Al, and/or a (e.g., any suitable) combination thereof.

As an example, the positive electrode active material may be a high nickel-based positive electrode active material with a nickel content of greater than or equal to 80 mol%, greater than or equal to 85 mol%, greater than or equal to 90 mol%, greater than or equal to 91 mol%, or greater than or equal to 94 mol%, and less than or equal to 99 mol% based on 100 mol% of metals excluding lithium in the lithium transition metal composite oxide. The high-nickel-based positive electrode active materials can achieve high capacity and can be applied to high-capacity, high-density rechargeable lithium batteries.

The positive electrode active material may include a lithium nickel-based composite oxide represented by Chemical Formula 11:

Chemical Formula 11 $Li_{a1}Ni_{x1}M^1_{y1}M^2_{z1}O_{2-b1}X_{b1}$

In Chemical Formula 11, $0.9 \le a1 \le 1.2$, $0.7 \le x1 \le 1$, $0 \le y1 \le 0.3$, $0 \le z1 \le 0.1$, $0.9 \le x1+y1+z1 \le 1.1$, and $0 \le b1 \le 0.1$; $M^1$ and $M^2$ may each independently be one or more elements selected from among Al, B, Ba, Ca, Ce, Co, Cr, Cu, Fe, Mg, Mn, Mo, Nb, Si, Sr, Ti, V, W, and Zr; and X may be one or more elements selected from among F, P, and S.

In Chemical Formula 11, in an embodiment, $0.75 \le x1 \le 1$, $0 \le y1 \le 0.28$, and $0 \le z1 \le 0.08$; $0.85 \le x1 \le 1$, $0 \le y1 \le 0.15$, and $0 \le z1 \le 0.15$; or $0.9 \le x1 \le 1$, $0 \le y1 \le 0.1$, and $0 \le z1 \le 0.1$.

For example, the positive electrode active material may include a lithium nickel-based composite oxide represented by Chemical Formula 12. The compound represented by Chemical Formula 12 may be referred to as a lithium nickel cobalt-based composite oxide:

Chemical Formula 12 $Li_{a2}Ni_{x2}Co_{y2}M^3_{z2}O_{2-b2}X_{b2}$

In Chemical Formula 12, 0.9≤a2≤1.8, 0.7≤x2<1, 0<y2≤0.2, 0≤z2≤0.2, 0.9≤x2+y2+z2≤1.1, and 0≤b2≤0.1, $M^3$ may be one or more elements selected from among Al, B, Ba, Ca, Ce, Cr, Fe, Mg, Mn, Mo, Nb, Si, Sr, Ti, V, W, and Zr, and X may be one or more elements selected from among F, P, and S.
In Chemical Formula 12, in an embodiment, 0.75≤x2≤0.99, 0≤y2≤0.15, and 0≤z2≤0.15; 0.85≤x2≤0.99, 0.01≤y2≤0.15, and 0.01≤z2≤0.15; or 0.9≤x2≤0.99, 0.01≤y2≤0.1, and 0.01≤z2≤0.1.
As an example, the positive electrode active material may include a lithium nickel-based composite oxide represented by Chemical Formula 13. The compound of Chemical Formula 13 may be referred to as a lithium nickel-cobalt-aluminum oxide or lithium nickel-cobalt-manganese oxide.

Chemical Formula 13 $Li_{a3}Ni_{x3}CO_{y3}M^4_{z3}M^5_{w3}O_{2-b3}X_{b3}$

In Chemical Formula 13, 0.9≤a3≤1.8, 0.7≤x3≤0.98, 0.01≤y3≤0.19, 0.01≤z3≤0.19, 0≤w3≤0.19, 0.9≤x3+y3+z3+w3≤1.1, and 0≤b3≤0.1, $M^4$ may be one or more elements selected from among Al, and Mn, $M^5$ may be one or more elements selected from among B, Ba, Ca, Ce, Cr, Fe, Mg, Mo, Nb, Si, Sr, Ti, V, W, and Zr, and X may be one or more elements selected from among F, P, and S.
In Chemical Formula 13, in an embodiment, 0.75≤x3≤0.98, 0≤y3≤0.16, and 0≤z3≤0.16; 0.85≤x3≤0.98, 0.01≤y3≤0.14, 0.01≤z3≤0.14, and 0≤w3≤0.14; or 0.9≤x3≤0.98, 0.01≤y3≤0.09, 0.01≤z3≤0.09, and 0≤w3≤0.09.
As an example, the positive electrode active material may include a lithium nickel-based composite oxide represented by Chemical Formula 14. The compound of Chemical Formula 14 may be referred to as a cobalt-free lithium nickel-manganese oxide.

Chemical Formula 14 $Li_{a4}Ni_{x4}Mn_{y4}M^6_{z4}O_{2-b4}X_{b4}$

In Chemical Formula 14, 0.9≤a4≤1.8, 0.7≤x4<1, 0<y4≤0.3, 0≤z4≤0.1, 0.9≤x4+y4+z4≤1.1, and 0≤b4≤0.1, $M^6$ may be one or more elements selected from among Al, B, Ba, Ca, Ce, Cr, Fe, Mg, Mo, Nb, Si, Sr, Ti, V, W, and Zr, and X may be one or more elements selected from among F, P, and S.
The cobalt-free lithium nickel-manganese oxide has strong structural instability (e.g., has poor structural stability), and its structure may collapse under high voltage and/or high temperature conditions, causing transition metals (e.g., Ni) to elute, and the stability and cycle-life of rechargeable lithium batteries may rapidly deteriorate.
However, the additive according to some embodiments, even if utilized in combination with cobalt-free lithium nickel-manganese-based oxide, may sufficiently suppress the structural collapse of the cobalt-free lithium nickel-manganese-based oxide even under high voltage and/or high temperature conditions, thereby improving the stability and cycle-life characteristics of a rechargeable lithium battery.

**Positive Electrode**

The positive electrode for a rechargeable lithium battery may include a current collector and a positive electrode active material layer on the current collector. The positive electrode active material layer may include a positive electrode active material and may further include a binder and/or a conductive material.
For example, the positive electrode may further include an additive that can function as a sacrificial positive electrode.
A content of the positive electrode active material may be 90 wt% to 99.5 wt%, and a content of the binder and the conductive material may each be 0.5 wt% to 5 wt%, based on 100 wt% of the positive electrode active material layer.
The binder serves to attach the positive electrode active material particles suitably (e.g., well) to each other and also to attach the positive electrode active material suitably (e.g., well) to the current collector. Non-limiting examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like.
The conductive material may be utilized to impart conductivity (e.g., electrical conductivity) to the electrode. Any material that does not cause chemical change (e.g., does not cause an undesirable chemical change in the rechargeable lithium battery) and conducts electrons can be utilized in the battery. Examples of the conductive material may include a

carbon-based material such as natural graphite, artificial graphite, carbon black, acetylene black, ketjen black, a carbon fiber, a carbon nanofiber, and/or carbon nanotube; a metal-based material containing copper, nickel, aluminum, silver, and/or the like, in a form of a metal powder or a metal fiber; a conductive polymer such as a polyphenylene derivative; or a mixture thereof.

In some embodiments, Al may be utilized as the current collector, but the present disclosure is not limited thereto.

**Negative Electrode Active Material**

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions may include a carbon-based negative electrode active material, for example, crystalline carbon, amorphous carbon and/or a (e.g., any suitable) combination thereof. The crystalline carbon may be graphite such as non-shaped (e.g., irregularly-shaped), sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_x$ ($0 < x \leq 2$) (e.g., $SnO_2$), a Sn-based alloy, and/or a (e.g., any suitable) combination thereof.

The silicon-carbon composite may be a composite of silicon and amorphous carbon. According to some embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be utilized in combination with a carbon-based negative electrode active material.

**Negative Electrode**

A negative electrode for a rechargeable lithium battery includes a current collector and a negative electrode active material layer on the current collector. The negative electrode active material layer includes a negative electrode active material and may further include a binder and/or a conductive material.

For example, the negative electrode active material layer may include 90 wt% to 99 wt% of the negative electrode active material, 0.5 wt% to 5 wt% of the binder, and 0.5 wt% to 5 wt% of the conductive material.

The binder may serve to attach the negative electrode active material particles suitably (e.g., well) to each other and also to attach the negative electrode active material suitably (e.g., well) to the current collector. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is utilized as the negative electrode binder, it may further include a cellulose-based compound capable of imparting viscosity. The cellulose-based compound may include one or more of carboxylmethyl cellulose, hydroxypropylmethyl cellulose, methyl cellulose, or alkali metal salts thereof. The alkali metal may be Na, K, or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, and/or a (e.g., any suitable) combination thereof.

The conductive material is included to provide electrode conductivity, and any electrically conductive material may be utilized as a conductive material unless it causes a chemical change (e.g., should not cause an undesirable chemical change in the rechargeable lithium battery). Examples of the conductive material may include (e.g., may be) a carbon-based material such as natural graphite, artificial graphite, carbon black, acetylene black, ketjen black, a carbon fiber, a carbon nanofiber, a carbon nanotube, and/or the like; a metal-based material such as copper, nickel, aluminum silver, and/or the like in a form (or provide) of a metal powder or a metal fiber; a conductive polymer such as a polyphenylene derivative; or a (e.g., any suitable) mixture thereof.

The negative current collector may include one selected from among a copper foil, a nickel foil, a stainless steel foil, a titanium foil, a nickel foam, a copper foam, a polymer substrate coated with a conductive metal, and/or a (e.g., any suitable) combination thereof, but the present disclosure is not limited thereto.

**Separator**

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, and/or a (e.g., any suitable) combination thereof on a (e.g., one or both surfaces or sides (e.g., opposite surfaces)) of the porous substrate.

The porous substrate may be a polymer film formed of any one selected from among polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic-based polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

**Rechargeable Lithium Battery**

The rechargeable lithium battery may be classified into cylindrical, prismatic, pouch, or coin-type or kind batteries, and/or the like depending on their shape. FIGs. 1 to 4 are schematic views illustrating rechargeable lithium batteries according to one or more embodiments. FIG. 1 shows a cylindrical battery, FIG. 2 shows a prismatic battery, and FIGs. 3 and 4 show pouch-type or kind batteries. Referring to FIGs. 1 to 4, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte . The rechargeable lithium battery 100 may include a sealing member 60 sealing the case 50, as shown in FIG. 1. In FIG. 2, the rechargeable lithium battery 100 may include a positive lead tab 11, a positive terminal 12, a negative lead tab 21, and a negative terminal 22. As shown in FIGs. 3 and 4, the rechargeable lithium battery 100 may include an electrode tab 70, which may be, for example, a positive electrode tab 71 and a negative electrode tab 72 serving as an electrical path for inducing (e.g., conducting) the current formed in the electrode assembly 40 to the outside.

The rechargeable lithium battery according to some embodiments may be applied to automobiles, mobile phones, and/or one or more suitable types (kinds) of electrical devices, but the present disclosure is not limited thereto.

Hereinafter, examples of the present disclosure and comparative examples are described. These examples, however, are not in any sense to be interpreted as limiting the scope of the present disclosure.

### Synthesis Example 1: Compound Represented by Chemical Formula 1-1-1

1,2-bis(diphenylphosphino)ethane (0.5 mmol, 2.5 mg) and hydrogen peroxide (3.0 mmol) were added in a dropwise fashion to a Schlenk flask containing 100 mL of methylene chloride and then, stirred at 50 °C for 24 hours. Subsequently, a compound obtained by filtering precipitates therefrom was dissolved in a small amount of acetone. The corresponding solution was slowly added in a dropwise fashion to 500 mL of methylene chloride by utilizing a dropping funnel, and then, the reactant was filtered, purified, and vacuum-dried to obtain a compound represented by Chemical Formula 1-1-1.

(H NMR (300MHz): $\delta$ = 2.49, 2.50 (4H,CH2P); 7.42 (t, 3JHH = 7.5Hz, 8H); 7.47 (t, 3JHH = 7.4Hz, 4H); 7.68 (dd, 3JHH = 7.5Hz, 3JHP =12.0Hz,8H))

Chemical Formula 1-1-1

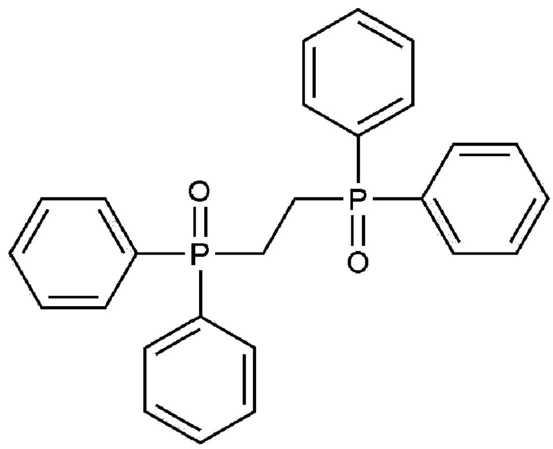

### Example 1

#### (1) Preparation of Electrolyte

An electrolyte was prepared by mixing ethylene carbonate (EC), ethyl methyl carbonate (EMC), and dimethyl carbonate (DMC) in a volume ratio of 2:1:7 to obtain a non-aqueous organic solvent, dissolving 1.15 M of $LiPF_6$, and adding 0.5 wt% of the additive represented by Chemical Formula 1-1-1 thereto.

In the composition of the electrolyte, a content "wt%" of the additive is based on 100 wt% of the total weight of the electrolyte (lithium salt + non-aqueous organic solvent + additive).

#### (2) Manufacturing of Rechargeable Lithium Battery Cells

$LiNi_{0.75}Mn_{0.23}Al_{0.02}O_2$ as a positive electrode active material, polyvinylidene fluoride as a binder, and acetylene black as a conductive material were mixed respectively in a weight ratio of 96:3:1 and then, dispersed in N-methyl pyrrolidone to prepare a positive electrode active material slurry.

The positive electrode active material slurry was coated on a 15 μm-thick Al foil, dried at 100 °C, and pressed to manufacture a positive electrode.

As the negative electrode active material, a mixture of artificial graphite and Si-C composite at a weight ratio of 93:7 was utilized, and the negative electrode active material, a styrene-butadiene rubber binder, and carboxymethyl cellulose were mixed and dispersed at a weight ratio of 98:1:1 in distilled water, to prepare a negative electrode active material slurry.

The Si-C composite included a core including artificial graphite and silicon particles and carbonyl pitch coated on the surface of the core.

The negative electrode active material slurry was coated on a 10 μm-thick Cu foil, dried at 100 °C, and pressed to manufacture a negative electrode.

An electrode assembly was manufactured by assembling the positive electrode, the negative electrode, and a separator made of polyethylene with a thickness of 10 μm, and the electrolyte was injected, to thereby manufacture a rechargeable lithium battery cell.

**Example 2**

An electrolyte and a rechargeable lithium battery cell were manufactured in substantially the same manner as in Example 1 except that the content of the additive was changed into 1 wt%.

**Example 3**

An electrolyte and a rechargeable lithium battery cell were manufactured in substantially the same manner as in Example 1 except that the content of the additive was changed into 2 wt%.

**Example 4**

An electrolyte and a rechargeable lithium battery cell were manufactured in substantially the same manner as in Example 1 except that the positive electrode active material was changed into $LiNi_{0.9}Co_{0.05}Al_{0.05}O_2$.

**Example 5**

An electrolyte and a rechargeable lithium battery cell were manufactured in substantially the same manner as in Example 4 except that the content of the additive was changed into 1 wt%.

**Example 6**

An electrolyte and a rechargeable lithium battery cell were manufactured in substantially the same manner as in Example 4 except that the content of the additive was changed into 2 wt%.

**Comparative Example 1**

An electrolyte and a rechargeable lithium battery cell were manufactured in substantially the same manner as in Example 1 except that the additive was not included (i.e., not added).

**Comparative Example 2**

An electrolyte and a rechargeable lithium battery cell were manufactured in substantially the same manner as in Example 1 except that a compound represented by Chemical Formula A (CAS No. 1663-45-2, Aldrich Corporation) was utilized instead of the additive represented by Chemical Formula 1-1-1.

Chemical Formula A

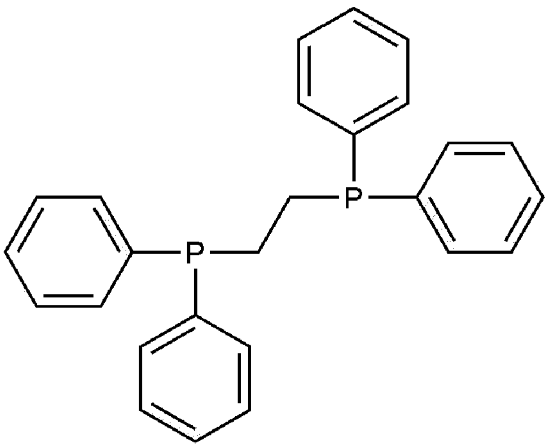

**Comparative Example** 3

An electrolyte and a rechargeable lithium battery cell were manufactured in substantially the same manner as in Example 1 except that a compound represented by Chemical Formula B (CAS No. 23936-60-9, Aldrich Corporation) was

utilized instead of the additive represented by Chemical Formula 1-1-1.

Chemical Formula B

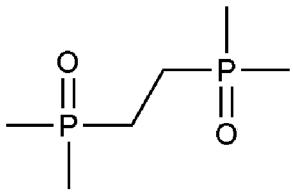

**Comparative Example 4**

An electrolyte and a rechargeable lithium battery cell were manufactured in substantially the same manner as in Comparative Example 1 except that the positive electrode active material was changed into $LiNi_{0.9}Co_{0.05}Al_{0.05}O_2$.

**Comparative Example 5**

An electrolyte and a rechargeable lithium battery cell were manufactured in substantially the same manner as in Comparative Example 2 except that the positive electrode active material was changed into $LiNi_{0.9}Co_{0.05}Al_{0.05}O_2$.

**Comparative Example 6**

An electrolyte and a rechargeable lithium battery cell were manufactured in substantially the same manner as in Comparative Example 3 except that the positive electrode active material was changed into $LiNi_{0.9}Co_{0.05}Al_{0.05}O_2$.

**Evaluation Example 1: Evaluation of High-temperature Storage Characteristics (1) DCIR Increase Rate**

The rechargeable lithium battery cells according to Examples 1 to 6 and Comparative Examples 1 to 6 were measured with respect to initial DC resistance (DCIR) by $\triangle V/\triangle I$ (voltage change/current change) and then, remeasured with respect to DC resistance after making each cell at a full-charge state (SOC 100%) as an internal maximum energy state and storing it at a high temperature of 60 °C for 30 days to calculate a DCIR increase rate (%) according to Equation 1, and the results are shown in Table 1.

Equation 1

$$\text{DCIR increase rate} = (\text{DCIR after 30 days} / \text{initial DCIR}) * 100$$

Table 1

| | Initial DCIR (mΩ) | DCIR after high-temperature storage (mΩ) | DCIR increase rate after high-temperature storage (%) |
|---|---|---|---|
| Comparative Example 1 | 11.29 | 13.55 | 120 |
| Comparative Example 2 | 11.56 | 13.64 | 118 |
| Comparative Example 3 | 12.30 | 15.01 | 122 |
| Comparative Example 4 | 9.85 | 12.12 | 123 |
| Comparative Example 5 | 9.96 | 11.95 | 120 |
| Comparative Example 6 | 10.12 | 12.45 | 123 |
| Example 1 | 11.15 | 11.48 | 103 |
| Example 2 | 11.18 | 11.29 | 101 |
| Example 3 | 11.60 | 12.30 | 106 |
| Example 4 | 9.86 | 11.04 | 112 |

(continued)

| | Initial DCIR (mΩ) | DCIR after high-temperature storage (mΩ) | DCIR increase rate after high-temperature storage (%) |
|---|---|---|---|
| Example 5 | 9.95 | 10.95 | 110 |
| Example 6 | 10.23 | 11.76 | 115 |

**(2) Gas Generation Amount**

The rechargeable lithium battery cells according to Examples 1 to 3 and Comparative Examples 1 to 3 were made to a full-charge state (SOC 100%) as an internal maximum energy state and then, stored at a high temperature of 60 °C for 1 day or 7 days to evaluate an amount of gas generated therefrom, and the results are shown in Table 2.

The amount of gas generated therefrom after stored at a high temperature was obtained by measuring a volume change before and after the storage and then, converting it into a mass change by utilizing the Archimedes method.

Table 2

| | Amount of gas generated after high temperature storage (mL) | |
|---|---|---|
| | 1st day | 7th day |
| Comparative Example 1 | 0.031 | 0.076 |
| Comparative Example 2 | 0.025 | 0.065 |
| Comparative Example 3 | 0.021 | 0.070 |
| Example 1 | 0.023 | 0.046 |
| Example 2 | 0.022 | 0.038 |
| Example 3 | 0.024 | 0.049 |

**Evaluation Example 2: Evaluation of high-temperature charge and discharge characteristics**

The rechargeable lithium battery cells according to Examples 1 to 3 and Comparative Examples 1 to 3 were charged at 0.33 C (CC/CV, 4.45 V, 0.025 C Cut-off) /discharged at 1.0 C (CC, 2.5 V Cut-off) at 45 °C for 200 cycles to calculate capacity retention according to Equation 2.

Capacity retention rate = (discharge capacity after 200 cycles / discharge capacity after 1 cycle) * 100 equation 2

Table 3

| | Capacity retention rate (%) |
|---|---|
| Comparative Example 1 | 85.3 |
| Comparative Example 2 | 86.5 |
| Comparative Example 3 | 84.2 |
| Example 1 | 92.1 |
| Example 2 | 93.3 |
| Example 3 | 91.8 |

**Summary**

According to Table 1, the rechargeable lithium battery cells of Examples 1 to 6 were each show to be suppressed or reduced from an increase in resistance at high temperatures (e.g., the rechargeable lithium battery cells of Examples 1 to 6 each show a suppressed or reduced increase in resistance at high temperatures), compared to the rechargeable lithium battery cells of Comparative Examples 1 to 6.

In addition, referring to Tables 2 and 3, the rechargeable lithium battery cells of Examples 1 to 3, compared with the rechargeable lithium battery cells according to Comparative Examples 1 to 3, each had suppressed or reduced gas generation at a high temperature and also, exhibited improved cycle-life characteristics.

Accordingly, as the additive according to some embodiments suppressed or reduced metal elution from a positive electrode active material at a high temperature, the rechargeable lithium battery cells were suppressed or reduced from an increase in resistance and gas generation and thus exhibited improved cycle-life characteristics.

Furthermore, even though the additive according to some embodiments was mixed with a cobalt-free lithium nickel-manganese-based oxide, the cobalt-free lithium nickel-manganese-based oxide was also suppressed or reduced from structural collapse under the high voltage and/or high temperature conditions.

The use of "may" when describing embodiments of the inventive concept refers to "one or more embodiments of the inventive concept."

Also, any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

**Reference Numerals**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

1. An electrolyte additive for a rechargeable lithium battery (100), the electrolyte additive is represented by Chemical Formula 1:

Chemical Formula 1

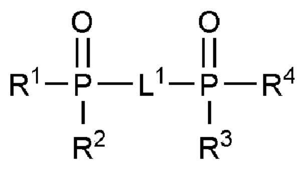

,

wherein, in Chemical Formula 1,
$L^1$ is a substituted or unsubstituted C1 to C20 alkylene group; and
$R^1$ to $R^4$ are each independently a substituted or unsubstituted C6 to C20 aryl group, and
wherein the term "substituted" refers to substitution of a hydrogen atom with one of a halogen atom, a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, and a C2 to C20 heterocycloalkynyl group, and a

C3 to C20 heteroaryl group.

**2.** The additive as claimed in claim 1, wherein $L^1$ is a substituted or unsubstituted C1 to C3 alkylene group.

**3.** The additive as claimed in claim 1 or 2, wherein the additive represented by Chemical Formula 1 is represented by Chemical Formula 1-1:

Chemical Formula 1-1

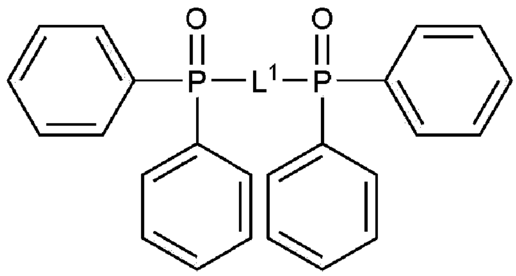

.

**4.** The additive as claimed in claim 1, wherein the additive represented by Chemical Formula 1 is represented by any one of Chemical Formulas 1-1-1 to 1-1-3:

Chemical Formula 1-1-1

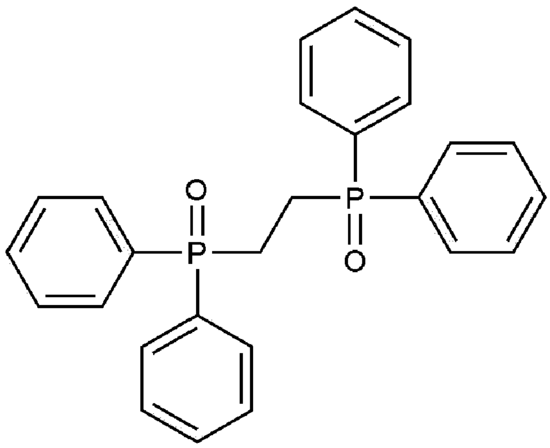

Chemical Formula 1-1-2

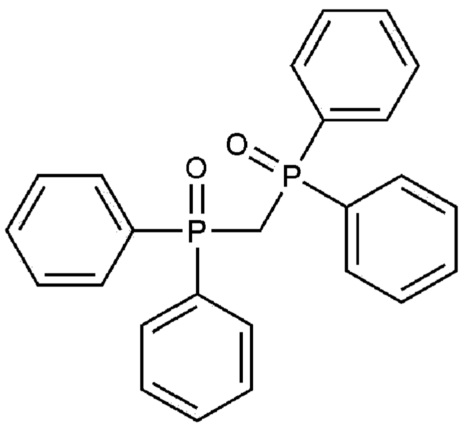

Chemical Formula 1-1-3

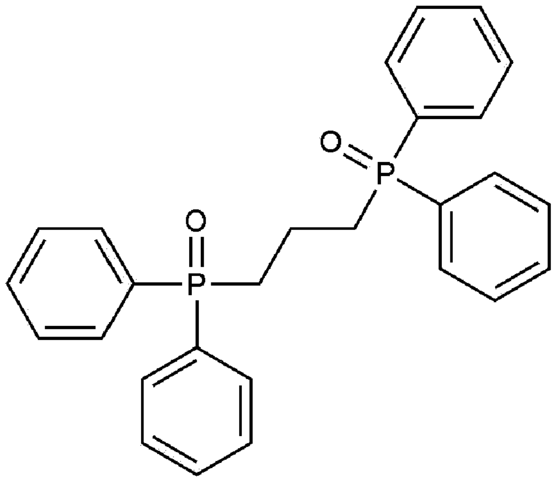

.

5. An electrolyte for a rechargeable lithium battery (100), the electrolyte comprising:

a non-aqueous organic solvent;
a lithium salt; and
an additive represented by Chemical Formula 1 as defined in claim 1.

6. The electrolyte as claimed in claim 5, wherein
An amount of the additive is0.05 wt% to3 wt% based on 100 wt% of the electrolyte.

7. A rechargeable lithium battery (100), comprising:

a positive electrode (10) comprising a positive electrode active material;
a negative electrode (20) comprising a negative electrode active material; and
an electrolyte as defined in claim 5.

8. The rechargeable lithium battery (100) as claimed in claim 7, wherein
the positive electrode active material comprises a lithium nickel-based composite oxide.

9. The rechargeable lithium battery (100) as claimed in claim 8, wherein
the lithium nickel-based composite oxide is represented by Chemical Formula 11:

Chemical Formula 11 $Li_{a1}Ni_{x1}M^1_{y1}M^2_{z1}O_{2-b1}X_{b1}$

wherein, in Chemical Formula 11,

$0.9 \leq a1 \leq 1.2$, $0.7 \leq x1 \leq 1$, $0 \leq y1 \leq 0.3$, $0 \leq z1 \leq 0.1$, $0.9 \leq x1+y1+z1 \leq 1.1$, and $0 \leq b1 \leq 0.1$;
$M^1$ and $M^2$ are each independently one or more elements selected from among Al, B, Ba, Ca, Ce, Co, Cr, Cu, Fe, Mg, Mn, Mo, Nb, Si, Sr, Ti, V, W, and Zr; and
X is one or more elements selected from among F, P, and S.

10. The rechargeable lithium battery (100) as claimed in claim 7, wherein
the positive electrode active material comprises a cobalt-free lithium nickel-based composite oxide.

11. The rechargeable lithium battery (100) as claimed in claim 10, wherein
the cobalt-free lithium nickel-based composite oxide is represented by Chemical Formula 14:

Chemical Formula 14 $Li_{a4}Ni_{x4}Mn_{y4}M^6_{z4}O_{2-b4}X_{b4}$

in Chemical Formula 14, $0.9 \leq a4 \leq 1.8$, $0.7 \leq x4 < 1$, $0 < y4 \leq 0.3$, $0 \leq z4 \leq 0.1$, $0.9 \leq x4+y4+z4 \leq 1.1$, and $0 \leq b4 \leq 0.1$;
M6 is one or more elements selected from among Al, B, Ba, Ca, Ce, Cr, Fe, Mg, Mo, Nb, Si, Sr, Ti, V, W, and Zr; and
X is one or more elements selected from among F, P, and S.

FIG. 1

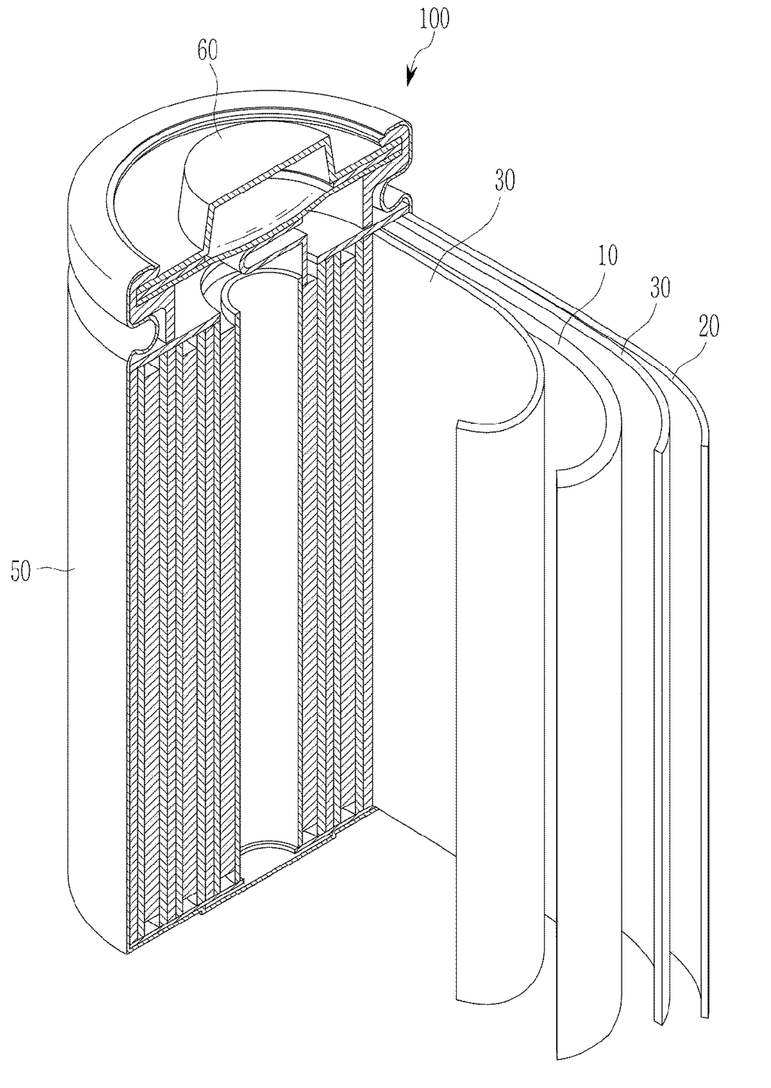

FIG. 2

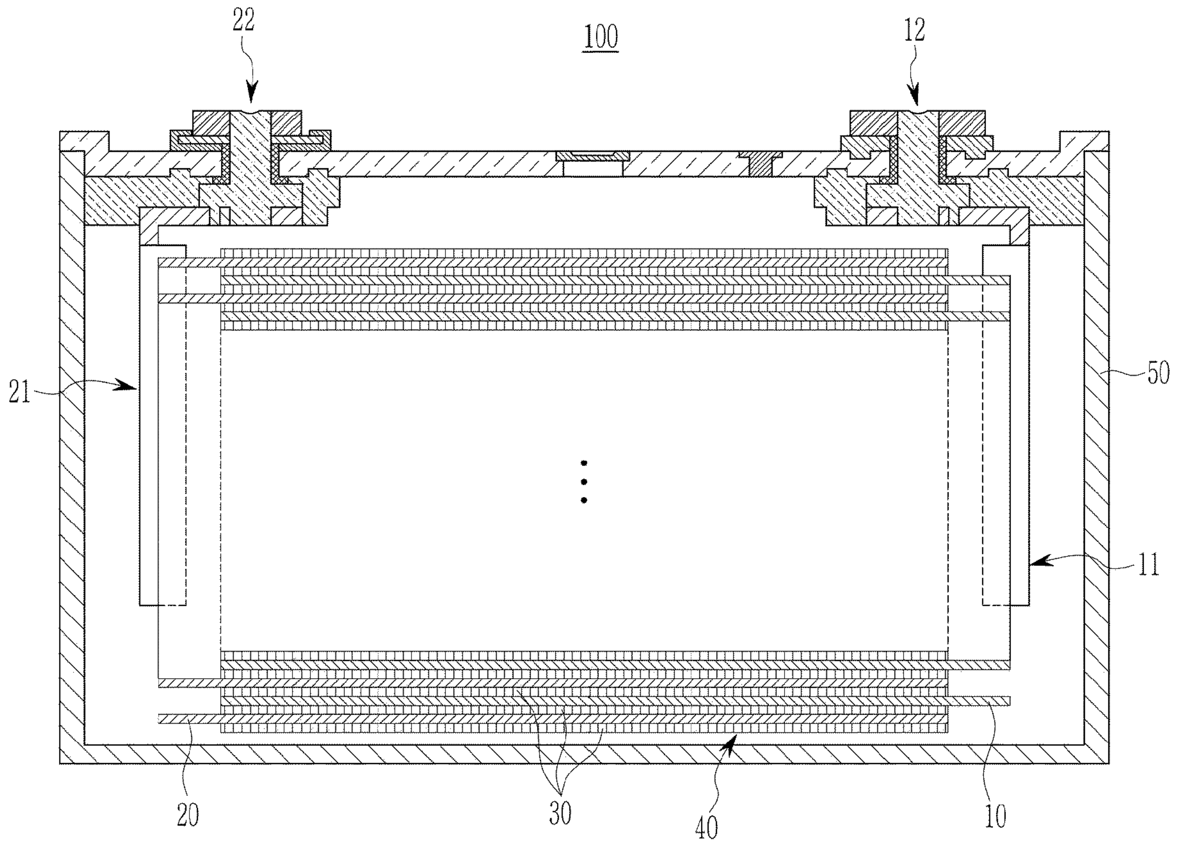


FIG. 3

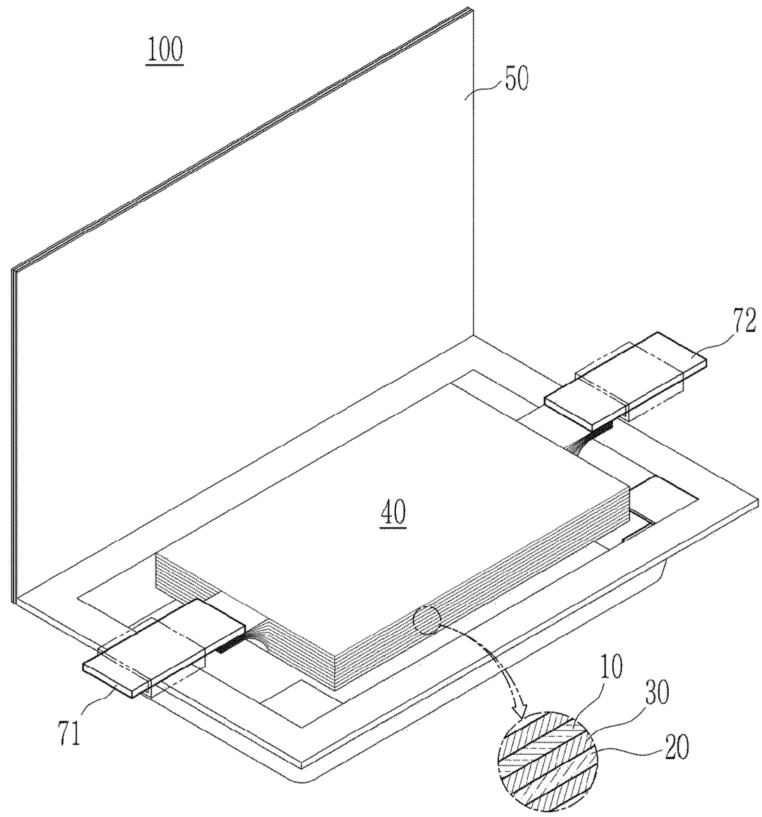

FIG. 4

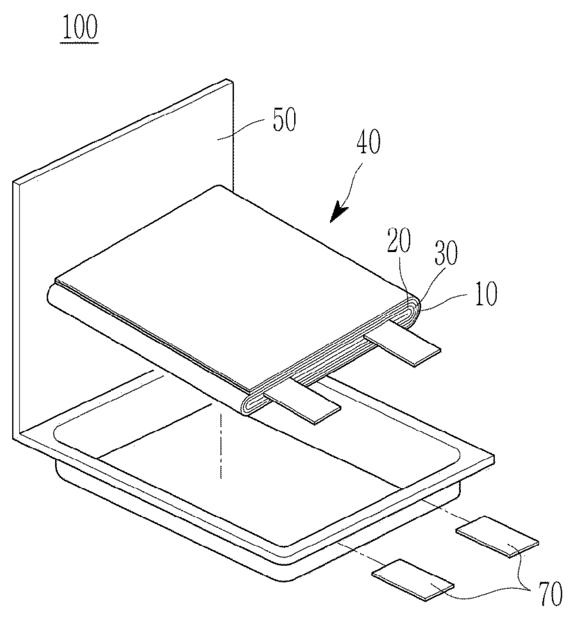

Europäisches Patentamt
European Patent Office
Office européen des brevets

## PARTIAL EUROPEAN SEARCH REPORT

under Rule 62a and/or 63 of the European Patent Convention. This report shall be considered, for the purposes of subsequent proceedings, as the European search report

Application Number
EP 24 18 3412

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | KR 102 353 962 B1 (SK INNOVATION CO LTD [KR]) 24 January 2022 (2022-01-24)<br>* claims 1-13 *<br>* paragraph [0086] - paragraph [0089] *<br>----- | 5-8,10<br>9,11 | INV.<br>H01M4/525<br>H01M10/052<br>H01M10/0525<br>H01M10/42<br>H01M10/0567 |

TECHNICAL FIELDS SEARCHED (IPC)

H01M

### INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

2

| Place of search | Date of completion of the search | Examiner |
|---|---|---|
| The Hague | 10 March 2025 | Domínguez Gutiérrez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04E07)

Europäisches Patentamt
European Patent Office
Office européen des brevets

# INCOMPLETE SEARCH SHEET C

Application Number
EP 24 18 3412

Claim(s) completely searchable:
5-11

Claim(s) not searched:
1-4

Reason for the limitation of the search:

The Applicant had been invited to file a statement indicating the subject-matter to be searched within the time limit indicated in the previous communication (Rule 63(1) EPC) because the claims were not considered to meet the relevant requirements of Art. 84 EPC to such an extent that no search of claims 1-4 was possible. The Applicant replied with arguments received on 04/February/2025.
The reply includes a request for the search to be based on pending claims 1-4.
The reply also declares that it should be possible to carry out a search for pending claims 2-4.
The reply also questions why the compounds of claim 4 cannot be searched.

It is not clear what is actually requested as the basis of the search. The following is drafted by assuming that claims 1-4 are requested.

A search is expected for claims 1-4, which have been deemed unclear as a basis for the search. The Applicant considers that a claim based solely on these compounds is clear and supported.
As mentioned in the invitation, bis diarylphosphine oxides (also named diphosphine dioxides) linked by a substituted or unsubstituted C1 to C20 alkylene groups, such as the compounds in claim 4, are known for decades. As early as the 60's. They are well?established in the field of organophosphorus chemistry. The fields of applications of these compounds are many and are unrelated. The compounds do not contain any additional or unusual technical features with respect to these known compounds overwhelmingly studied.
This renders these compounds notoriously known: their structure, properties, and applications are uncontroversial and widely disseminated among skilled persons in the different technical fields beyond that of organophosphorous compounds. Claims 1-4 merely recite compounds known since decades, their existence undisputed at the priority date and used across various technical fields, that have prima facie no additional technical features
Since such compounds are notoriously known, no meaningful search is possible for claims 1-4 (Rule 63 EPC and Guidelines B-VIII, 3).
Protection sought for notoriously known compounds that lack specificity regarding any technical property fails to comply with the fundamental requirements of clarity under Art. 84 EPC.
This is in line with "notorious" as decided in T 1411/08.

The Applicant has argued that the portion in the invitation pursuant to R. 63(1) EPC, declaring that
bis diarylphosphine oxides linked by a substituted or unsubstituted C1 to C20 alkylene group [...] are known for decades and cover applications in multiple technical fields
is an unsubstantiated assertion without providing any argumentations.

Europäisches Patentamt
European Patent Office
Office européen des brevets

**INCOMPLETE SEARCH SHEET C**

Application Number
EP 24 18 3412

It has also been declared that there is a contradiction in saying that an allegedly known subject matter is not searchable.

This first reasoning is substantiated by the fact that the EPO's search purpose is not to provide a redundant confirmation of what is already undisputed in the state of the art. When a compound is notorious, it is by definition part of the common general knowledge. Therefore, excluding it from a search is consistent with the principle that a search should yield non-trivial, meaningful results, contrary to what is presently claimed.
There is no contradiction. The underlying principle in the EPC is that the search must serve to reveal previously undisclosed meaningful technical information. If a compound is notorious, its inclusion in a search would not alter the assessment of novelty or inventive step, as the focus shifts to identifying any technical features in the subject-matter, beyond the mere presence of a known compound. There appears to be none and no argumentation has been provided in this respect.
The Applicant has not provided any technical information or argumentation that would support any kind of technical contribution that goes beyond what is well-known -i.e., widely recognized, documented, and undisputed within the technical field.

# ANNEX TO THE EUROPEAN SEARCH REPORT ON EUROPEAN PATENT APPLICATION NO.

EP 24 18 3412

This annex lists the patent family members relating to the patent documents cited in the above-mentioned European search report. The members are as contained in the European Patent Office EDP file on
The European Patent Office is in no way liable for these particulars which are merely given for the purpose of information.

10-03-2025

| Patent document cited in search report | Publication date | Patent family member(s) | Publication date |
|---|---|---|---|
| KR 102353962 B1 | 24-01-2022 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS*, 1663-45-2
- *CHEMICAL ABSTRACTS*, 23936-60-9